# EUROPEAN PATENT APPLICATION

(11) **EP 2 072 314 A2**
(43) Date of publication of application: **24.06.2009**
(21) Application number: 08170226.8
(22) Date of filing: 28.11.2008
(51) Int. Cl.: B60K 17/22, B60K 17/04

(54) **Vehicle**

(30) Priority: 10.12.2007 US 953107
(71) Applicant: Deere & Company, Moline, IL 61265-8098 (US)
(72) Inventor: Davison, Scott E., Cedar Falls, IA 50613 (US); Schmidt, Keith J., Waterloo, IA 50701 (US); Schletzbaum, John W., Hudson, IA 50643 (US); Hanus, Jill B., Cedar Falls, IA 50613 (US)
(74) Representative: Holst, Sönke

(57) **Abstract**

The invention relates to a vehicle (10), in particular to a tractor vehicle. There is a need for a tractor design which results both in a low operator position and a minimal foot obstruction. A vehicle (10) includes an engine (14), a transmission (17), a driveshaft (24), a rear axle housing (18), a frame (12) and a seat (22) supported on the frame (12). The driveshaft (24) has a front end (26) coupled to the engine (14) and a rear end (28) coupled to the transmission (17). The transmission (17) is positioned under the seat (22), rearward of a normal operator foot position and immediately adjacent to the rear axle housing (18). The front end (26) of the driveshaft (24) is lower than the rear end (28) of the driveshaft (24). The driveshaft (24) extends along a driveshaft axis (50) which is oriented approximately 1.5 degrees with respect to a horizontal plane (52). The engine (14) has an output shaft (15) which is parallel to the driveshaft (24), and the transmission (17) has an input shaft (54) which is parallel to the driveshaft (24).

## Description

The present invention relates to a vehicle having an engine, a transmission, a driveshaft, a rear axle housing, a frame and a seat supported on the frame, the driveshaft having a front end coupled to the engine and a rear end coupled to the transmission, wherein the transmission being positioned under the seat.

Tractor operators want to be seated as low as possible in the tractor cab so they can avoid overhead obstructions. For this reason many current agricultural tractors have a cab floor which has lower floor parts arranged on either side of a central tunnel which covers drive line or transmission parts. The lower floor parts allow an operator to sit lower. Tractor operators also want to have no or minimal obstructions to their feet on the cab floor during mounting, dismounting, and operation. Some tractors have transmission components which are too wide to be contained in a central tunnel which can be straddled by the operator. In such tractors, the cab floor either side of the transmission and the seat must be raised to move the operator high enough to avoid the need to straddle the transmission. This results in the operator being placed higher from the ground than desired. It is desired to provide a tractor design which results both in a low operator position and a minimal foot obstruction.

Accordingly, an object of this invention is to provide a tractor design which results both in a low operator position and a minimal foot obstruction.

The object of the invention will be achieved by the teachings of claim 1. Further advantageous embodiments are defined within the subclaims.

According to the invention a vehicle of the above mentioned type is provided with a transmission wherein the transmission is positioned under the seat rearward of a normal operator foot position and immediately adjacent to the rear axle housing; and the front end of the driveshaft being lower than the rear end of the driveshaft.

The driveshaft extends along a driveshaft axis which is oriented approximately 1.5 degrees with respect to a horizontal plane. The engine has an output shaft which is parallel to the driveshaft, and the transmission has an input shaft which is parallel to the driveshaft.

Fig. 1 is a simplified side view of a vehicle component configuration embodying the invention;

Fig. 2 is an enlarged sectional view of a portion of Fig. 1; and

Fig. 3 is perspective view of the vehicle component configuration of Fig. 1.

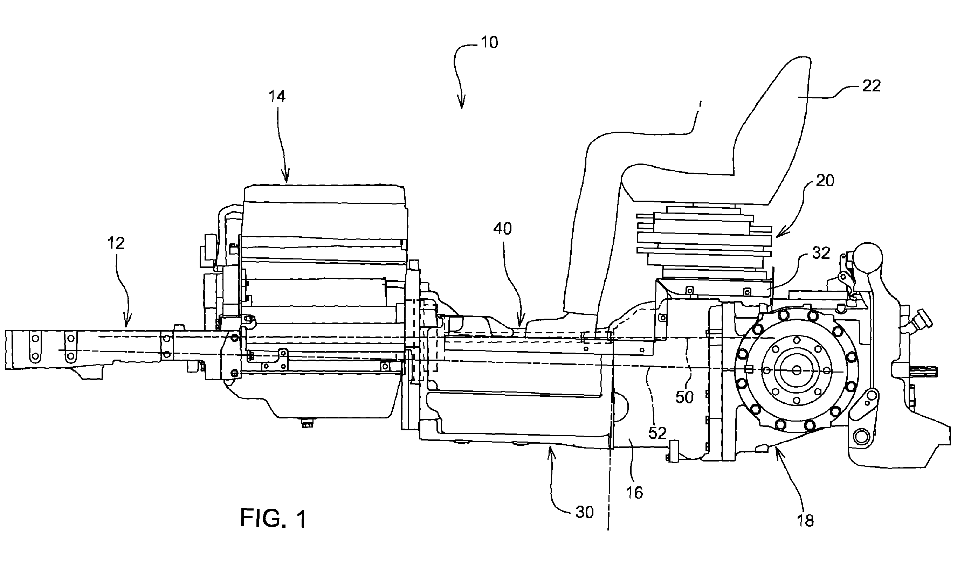

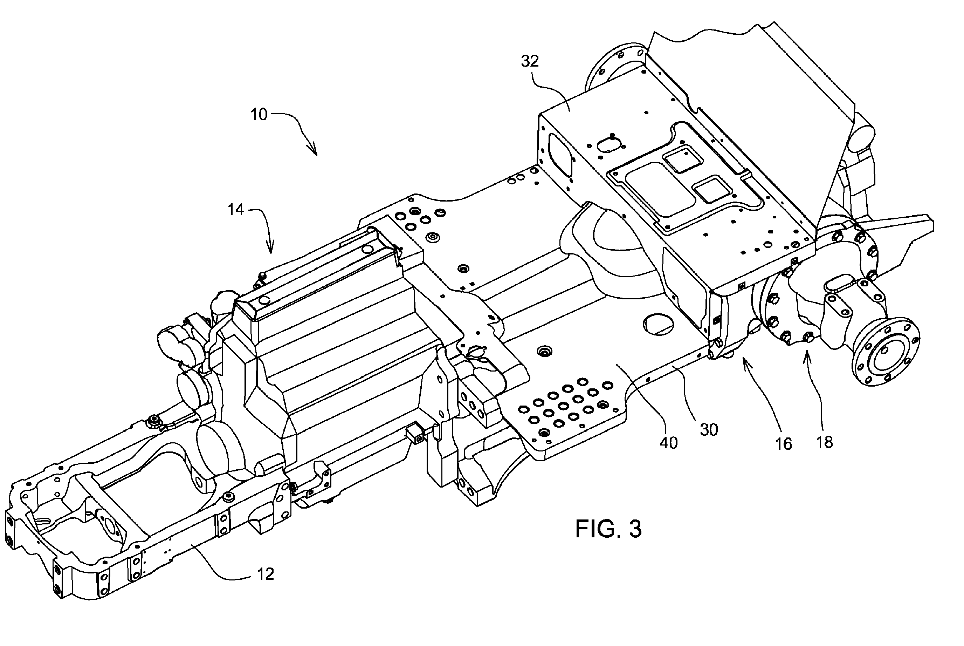

Referring to Figs. 1-3, a vehicle 10, such as a tractor, includes a frame 12 which supports an engine 14, a transmission housing 16 which encloses a transmission 17, a rear axle housing 18, a seat platform 20 and a seat 22. A drive line 24 transmits power from the rear end of the engine 14 to the front end of the transmission. The driveshaft 24 has a front end 26 coupled to the engine 14 and a rear end 28 coupled to the transmission 17.

The frame 12 includes a lower midframe 30 which is connected between the engine 14 and the transmission housing 16, and an upper seat frame 32 which is positioned behind and higher than the midframe 30 and above the transmission housing 16. The seat platform 20 and the seat 22 are supported above the seat frame 32. The midframe 30 also supports a floor 40 which extends from a front end adjacent the rear end of the engine 14 to a rear end which overlays a front portion of the transmission housing 16. The floor 40 is mounted to a platform structure (not shown) which is mounted to the midframe 30 in the front and to the rear axle housing 18 at the rear.

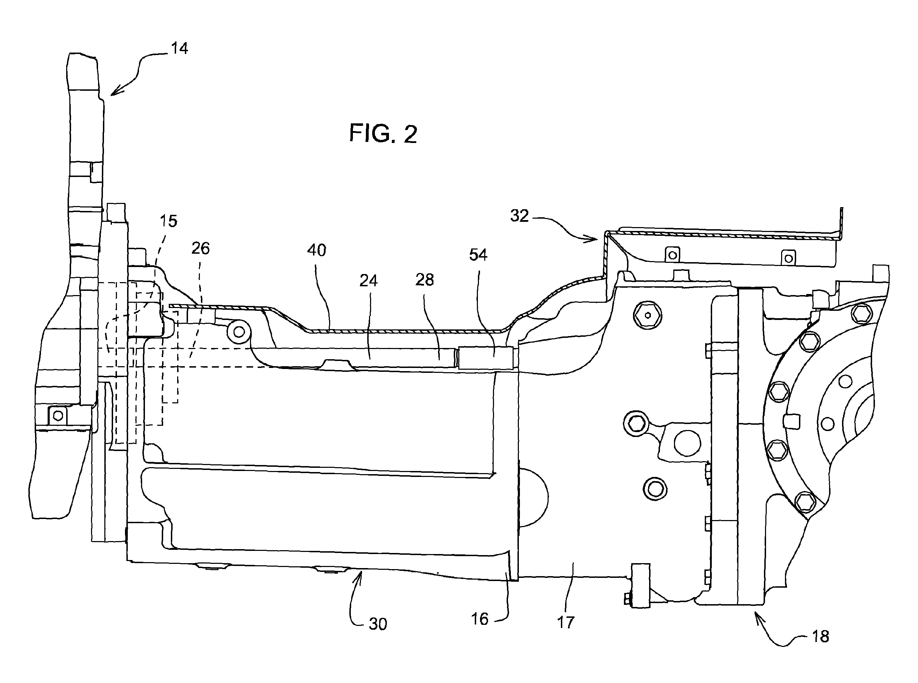

As best seen in Figs. 1 and 2, the drive line front end 26 is lower than the drive line rear end 28. Preferably, the driveshaft 24 has an axis 50 which is oriented at an angle of about 1.5 degrees with respect to the horizontal plane 52. As a result, the transmission housing 16 is positioned under the seat 22, and rearward of a normal operator foot position and immediately adjacent to the rear axle housing 18. Preferably, the engine 14 has an output shaft 15 which is parallel to the driveshaft 24, and the transmission 17 has an input shaft 54 which is parallel to the driveshaft 24. The axis of engine output shaft 15 is also oriented approximately 1.5 degrees with respect to a horizontal plane, as is the transmission input shaft 54, so that both the engine 14 and the transmission housing 16 have front ends which are tilted downward.

This vehicle component configuration provides adequate clearance for the natural position of the heels of the operator. Only a very small tunnel is required because the transmission is placed in close proximity to the rear axle underneath the seated position of the operator- rearward of the natural position to the rear of the heels of the operator. The transmission and engine are tilted down approximately 1.5 deg. with the relation to the ground so the front of the transmission is moved closer to the ground. This also allows the seat and operator to be moved closer to the ground. The shaft centers of the engine and the transmission are both tilted the same angle to allow only the passage of a small diameter driveshaft between the engine and transmission. Driveshaft u-joints are not required allowing for a smaller diameter drive shaft allowing for a substantially flat floor. This greatly improve the ease of egress and exit and still maintains the low operating position of the operator and the short wheelbase of the tractor.

The result is a more compact tractor package which allows operation in low clearance areas such as orchards, low barns, and livestock sheds. This invention increases the ease of getting on and off the vehicle or tractor, and is applicable to tractors with and without cabs. Feet can be spaced at any width for comfort of the operator.

While the present invention has been described in conjunction with a specific embodiment, it is understood that many alternatives, modifications and variations will be apparent to those skilled in the art in light of the foregoing description.

Accordingly, this invention is intended to embrace all such alternatives, modifications and variations which fall within the spirit and scope of the appended claims.

## Claims

1. In a vehicle (10) having an engine (14), a transmission (17), a driveshaft (24), a rear axle housing (18), a frame (12) and a seat (22) supported on the frame (12), the driveshaft (24) having a front end (26) coupled to the engine (14) and a rear end (28) coupled to the transmission (17), wherein the transmission (17) being positioned under the seat (22), **characterized in that** the transmission (17) is positioned under the seat (22) rearward of a normal operator foot position and immediately adjacent to the rear axle housing (18); and the front end (26) of the driveshaft (24) being lower than the rear end (28) of the driveshaft (24).

2. The vehicle of claim 1, wherein: the driveshaft (24) extends along a driveshaft axis (50) which is oriented approximately 1.5 degrees with respect to a horizontal plane (52).

3. The vehicle of claim 1 or 2, wherein: the engine (14) has an output shaft axis which is oriented approximately 1.5 degrees with respect to the horizontal plane (52); and the transmission (17) has an input shaft axis which is oriented approximately 1.5 degrees with respect to the horizontal plane (52), both the engine (14) and a transmission housing (16) having front ends which are tilted downward.
